# FASCICULE DE BREVET EUROPEEN

(11) **EP 3 812 194 B1**
(45) Date de publication et mention de la délivrance du brevet: **21.12.2022**
(21) Numéro de dépôt: 20200453.7
(22) Date de dépôt: 07.10.2020
(51) Int. Cl.: B60L 5/32

(54) **DISPOSITIF DE DESCENTE RAPIDE POUR PANTOGRAPHE, PANTOGRAPHE AINSI ÉQUIPÉ, PROCÉDÉ DE MISE EN OEUVRE ET PROCÉDÉ D'AMÉLIORATION D'UN TEL PANTOGRAPHE**
VORRICHTUNG ZUR SCHNELLEN ABSENKUNG EINES STROMABNEHMERS, DAMIT AUSGERÜSTETER STROMABNEHMER, UMSETZUNGS- UND VERBESSERUNGSVERFAHREN FÜR EINEN SOLCHEN STROMABNEHMER
QUICK DESCENT DEVICE FOR A PANTOGRAPH, PANTOGRAPH EQUIPPED WITH SAME, METHOD FOR IMPLEMENTING SAME AND METHOD FOR IMPROVING SUCH A PANTOGRAPH

(30) Priorité: 24.10.2019 FR 1911918
(43) Date de publication de la demande: 28.04.2021
(73) Titulaire: Faiveley Transport Tours, 37701 Saint Pierre des Corps Cedex (FR)
(72) Inventeur: GEOFFROY, Philippe, 37510 Ballan Mire (FR)
(74) Mandataire: Schmidt, Martin Peter

(56) Documents cités:
- WO-A1-2015/112174
- WO-A1-2019/158846
- GB-A- 1 374 972

## Description

### DOMAINE TECHNIQUE

La présente invention concerne le domaine des pantographes, en particulier pour un véhicule ferroviaire. Elle a tout d'abord pour objet un dispositif de descente rapide, destiné à équiper un pantographe, ainsi qu'un pantographe équipé d'un tel dispositif de descente rapide. Elle a également pour objet un procédé de mise en oeuvre d'un tel pantographe, ainsi qu'un procédé d'amélioration d'un tel pantographe au moyen de ce dispositif de descente rapide.

### ARRIÈRE-PLAN TECHNOLOGIQUE

De manière habituelle, un pantographe comprend tout d'abord un châssis permettant sa fixation sur la caisse d'un véhicule, en particulier de type ferroviaire. Ce châssis supporte un bras articulé, dont l'extrémité supérieure reçoit un archet destiné à venir au contact de la caténaire d'alimentation. Ce pantographe assure par conséquent le contact électrique entre l'unité de traction, par exemple la locomotive, et la caténaire précitée.

On conçoit que, au fur et à mesure de la mise en service du véhicule, le contact électrique a tendance à provoquer une usure des éléments mécaniques en contact mutuel. On conçoit également qu'il est primordial d'éviter une usure de la caténaire, lors d'un tel contact. Par conséquent, il est connu de munir le pantographe d'au moins une bande de frottement, qui est fixée sur l'archet de manière à venir en contact avec la caténaire. Cette bande de frottement, qui est réalisée en un matériau conducteur moins dur que celui constitutif de la caténaire, permet donc de collecter le courant électrique provenant de cette caténaire sans pour autant endommager cette dernière.

Cette bande de frottement est classiquement intégrée dans un dispositif dit de descente rapide, tel que visé par l'invention. Dans cet esprit, cette bande est pourvue d'un circuit, permettant de détecter la dégradation de cette bande. Ce circuit de détection est alimenté au moyen d'un fluide, qui est typiquement de l'air comprimé. Il est par ailleurs prévu une vanne, comprenant une chambre principale et une chambre pilote séparées par une membrane, dans laquelle est ménagé un trou calibré.

En service, cette vanne présente plusieurs fonctions. Elle intervient tout d'abord dans la phase de montée initiale du pantographe, depuis sa position abaissée contre la caisse du véhicule vers sa position relevée en contact avec la caténaire. Durant cette phase de montée une unité pneumatique, placée dans la caisse du véhicule, fournit de l'air comprimé à un organe de déploiement du bras articulé, qui est typiquement un coussin. La ligne de fourniture, reliant cette unité et ce coussin, possède une dérivation permettant l'alimentation de la chambre principale de la vanne. Durant cette phase, l'air comprimé est admis au niveau de la chambre principale, puis passe par le trou calibré de la membrane. Cet air alimente alors la chambre pilote de la vanne, puis les circuits de détection de dégradation des bandes de frottement via une conduite de surveillance.

En l'absence de détection d'avarie, la pression dans la chambre pilote est appliquée sur une face de la membrane, dont la surface est plus importante que celle de la face opposée sur laquelle est appliquée la pression de la chambre principale. Il en résulte que l'effort appliqué sur la membrane, dans la chambre pilote, est supérieur à celui appliqué sur la membrane dans la chambre principale. La membrane obture par conséquent la sortie de la chambre principale, qui est à l'air libre. Dans le cas où il se produit une fuite au niveau d'un circuit de détection de dégradation d'une bande de frottement, correspondant à une usure critique de cette dernière, la pression dans la chambre pilote de la vanne diminue brusquement, de manière à atteindre une valeur proche de la pression atmosphérique.

Il s'établit par conséquent un écart de pressions significatif entre cette chambre pilote et la chambre principale, qui induit une force résultante tendant à déformer la membrane qui n'obture plus la sortie de la chambre principale. La chambre principale étant raccordée au coussin de déploiement, ce dernier se trouve alors lui aussi mis à la pression atmosphérique, ce qui provoque une descente sensiblement immédiate du pantographe. Par conséquent, tout risque d'endommagement de la caténaire est écarté.

L'utilisation de la vanne, telle que décrite ci-dessus, présente en théorie des avantages notables. En effet, du moins en service normal, cette vanne est à même de remplir plusieurs fonctions distinctes tout en bénéficiant d'une structure simple et, par conséquent, d'un prix de revient réduit. Cependant, en pratique, cette vanne est sujette à certains dysfonctionnements, qui sont le plus souvent de type aléatoire.

En particulier, il a été constaté qu'elle ne permet pas toujours d'assurer la fonction de montée initiale du bras articulé, permettant de placer le pantographe au contact de la caténaire. Cette occurrence est particulièrement préjudiciable au bon fonctionnement du réseau ferroviaire. En effet, elle implique un arrêt du train, s'accompagnant d'un retard pouvant être conséquent.

GB1374972A et WO2015112174A1 divulguent des dispositifs de descente rapide pour pantographe.

Compte tenu de ce qui précède, l'invention vise à remédier à au moins certains inconvénients de l'art antérieur présenté ci-dessus.

Elle vise en substance à proposer un dispositif de descente rapide pour pantographe, qui est susceptible de remplir les différentes fonctions qui lui sont affectées.

Elle vise en particulier à proposer un tel dispositif qui permet d'assurer, de façon parfaitement fiable, la montée du bras articulé de façon à mettre en contact électrique le pantographe avec la caténaire.

L'invention vise également à proposer un tel dispositif, dont la structure mécanique n'est pas significativement plus complexe que celle des dispositifs antérieurs, de manière à conserver un prix de revient raisonnable.

Elle vise enfin à proposer un tel dispositif qui peut être installé sur un pantographe de première monte, ou bien qui peut alternativement se substituer à un dispositif de descente rapide déjà en place sur un pantographe en service.

### OBJETS DE L'INVENTION

Au moins un des objectifs ci-dessus est atteint par l'intermédiaire d'un premier objet de l'invention, qui est un dispositif de descente rapide pour pantographe, selon la revendication 1 annexée.

D'autres caractéristiques avantageuses de ce dispositif de descente rapide font l'objet des revendications 2 à 10 annexées:
Un second objet de l'invention est un pantographe selon la revendication 11 annexée.
Un troisième objet de l'invention est un procédé de mise en oeuvre d'un pantographe tel que ci-dessus, selon la revendication 12 annexée.
Un quatrième objet de l'invention est un procédé d'amélioration d'un pantographe selon la revendication 13 annexée.
Un cinquième objet de l'invention est un véhicule ferroviaire selon la revendication 14 annexée.

Il est du mérite de la demanderesse d'avoir identifié les inconvénients, liés à la mise en œuvre de l'art antérieur ci-dessus. En substance la demanderesse a mis en lumière que, dans l'état de la technique, les dysfonctionnements aléatoires de la vanne proviennent essentiellement du fait que la position de la membrane est instable lors de la phase théorique de montée du pantographe. En particulier cette membrane a tendance à se décoller par rapport au siège, qui est placé à la sortie de la chambre principale. Ce phénomène est plus ou moins accentué, notamment du fait de la température extérieure, de l'usure de la membrane ou encore de l'encrassement du trou calibré ménagé dans cette membrane. Lorsque cet effet est trop significatif, la quantité d'air s'échappant de la vanne devient trop élevée.

Par conséquent, la quantité d'air passant au travers du trou calibré de la membrane n'est plus suffisante, de façon à augmenter la pression dans la chambre pilote en vue de plaquer à nouveau la membrane sur le siège précité. Par conséquent à la fois les bandes de frottement ainsi que le coussin de déploiement sont mis à une pression nettement inférieure, à celle nécessaire pour assurer la montée correcte du pantographe. Cela conduit à un dysfonctionnement majeur, puisque ce pantographe ne peut pas remplir sa fonction principale de collecte du courant, ce qui implique l'arrêt du train.

Au contraire, l'invention prévoit des moyens permettant de condamner, de façon temporaire, l'alimentation en fluide de la chambre principale appartenant à la vanne. Étant donné que la chambre principale n'est plus alimentée en fluide, le fluide admis dans le coussin de déploiement ne peut plus échapper par la vanne. Dans ces conditions, ce coussin de déploiement se trouve alimenté en fluide comprimé à une pression appropriée, en vue d'une montée correcte du pantographe.

On notera que ces moyens de condamnation sont de nature temporaire, à savoir qu'ils peuvent être désactivés de manière à ce que la vanne puisse remplir l'ensemble des fonctions qui lui sont dévolues. En particulier, une fois que la chambre principale est à nouveau alimentée en fluide comprimé, le fonctionnement du dispositif de descente rapide conforme à l'invention est sensiblement analogue à celui des dispositifs de l'art antérieur.

### DESCRIPTION DES FIGURES

L'invention va être décrite ci-après, en référence aux dessins annexés, donnés uniquement à titre d'exemples non limitatifs, dans lesquels :
[Fig. 1] est un diagramme pneumatique, illustrant à l'état statique les différents éléments constitutifs d'un dispositif de descente rapide conforme à un premier mode de réalisation de l'invention, lequel est monté sur un pantographe d'un véhicule ferroviaire.
[Fig. 2] est une vue de profil, illustrant à l'état dynamique la circulation d'air comprimé dans le dispositif de descente rapide durant la montée initiale du pantographe.
[Fig. 3] est une vue de profil analogue à la figure 2, illustrant la circulation d'air comprimé dans le dispositif de descente rapide dans le cadre d'un fonctionnement normal du pantographe.
[Fig. 4] est une vue de profil analogue à la figure 2, illustrant la circulation d'air comprimé dans le dispositif de descente rapide lors d'un retrait en urgence du pantographe.
[Fig. 5] est une vue de profil analogue à la figure 2, illustrant la circulation d'air comprimé dans le dispositif de descente rapide, une fois que le pantographe a été entièrement rabaissé.
[Fig. 6] est un diagramme pneumatique analogue à la figure 1, illustrant un dispositif de descente rapide conforme à un deuxième mode de réalisation de l'invention.
[Fig. 7] est un diagramme pneumatique analogue à la figure 1, illustrant un dispositif de descente rapide conforme à un troisième mode de réalisation de l'invention.
[Fig. 8] est un diagramme pneumatique analogue à la figure 1, illustrant un dispositif de descente rapide conforme à un quatrième mode de réalisation de l'invention.

### DESCRIPTION DÉTAILLÉE

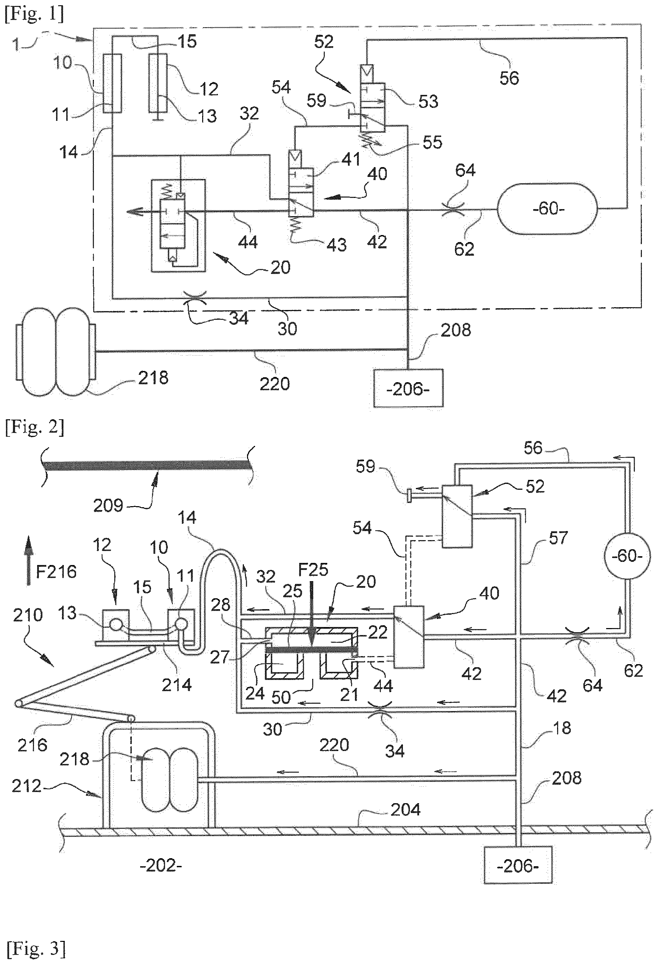

Les figures 1 et 2 illustrent, sous forme respectivement d'un diagramme pneumatique et d'une vue mécanique, un dispositif de descente rapide selon l'invention, lequel est désigné dans son ensemble par la référence 1 sur la figure 1. Ce dispositif équipe un pantographe 210, décrit plus en détail ci-après, appartenant à un véhicule ferroviaire 200, représenté de façon schématique sur la figure 2.

Ce véhicule 200 est de type classique de sorte que, sur cette figure 2, on a uniquement illustré sa caisse 202 de manière partielle, ainsi que son toit 204. Ce véhicule est en outre équipé, de façon connue, d'une unité 206 de fourniture d'un fluide, notamment d'air comprimé, ainsi que d'une ligne principale dite de fourniture 208. Ce véhicule ferroviaire 200 est conçu pour circuler sur une voie ferroviaire non représentée, au-dessus de laquelle s'étend une caténaire 209. Cette dernière, qui est représentée de façon partielle, assure de manière classique le passage d'un courant électrique d'alimentation.

La figure 2 illustre également de manière schématique le pantographe 210 précité, qui est monté sur le véhicule 200. Ce pantographe est conçu pour capter le courant électrique d'alimentation de la caténaire 209 et, par conséquent, alimenter électriquement le véhicule ferroviaire 200. Ce pantographe est également de type connu en soi, de sorte qu'il ne sera pas décrit en détail. Il comprend tout d'abord un châssis 212, monté sur le toit du véhicule, ainsi qu'un archet 214 destiné à venir au contact de la caténaire 209.

Un bras articulé 216, qui relie le châssis et l'archet, est mobile entre une position repliée dans laquelle il se situe au voisinage du toit, ainsi qu'une position dépliée dans laquelle il assure le contact de l'archet et de la caténaire. La mise en mouvement du bras 216 est assurée par un organe de déploiement, qui est typiquement un coussin 218. Ce dernier est alimenté de façon pneumatique par une ligne d'alimentation 220, s'étendant à partir de la ligne principale 208 ci-dessus.

Le dispositif de descente rapide conforme à l'invention 1 comprend essentiellement, tout d'abord, au moins une bande de frottement, une vanne principale, un distributeur principal, un distributeur intermédiaire et une chambre de réserve. Ce dispositif 1 comprend en outre différentes conduites permettant l'admission d'air comprimé depuis l'unité 206, ainsi que la circulation d'air comprimé entre les éléments mécaniques ci-dessus. Sur la figure 1, tous les éléments mécaniques appartenant à ce dispositif sont affectés de références numériques strictement inférieures au nombre 100.

Dans le présent exemple de réalisation, il est prévu deux bandes de frottement identiques 10 et 12. Cependant, à titre de variante, le dispositif 1 peut être équipé au moyen d'un nombre différent de ces bandes, en particulier avec une unique bande de frottement. Chaque bande 10 et 12, qui est de type connu en soi, est notamment équipée d'un circuit respectif dit de détection d'usure 11 et 13, montré de façon schématique. Le circuit de détection d'usure est généralement constitué d'un tube traversant la bande de frottement dans le sens de sa longueur. La rupture de ce tube ou son percement sont le signalement d'une bande usée ou cassée.

De façon classique, une des deux extrémités du circuit de détection 11 est alimenté par une conduite dite de surveillance 14. Sur l'ensemble des figures 2 à 5, cette conduite 14 est représentée à distance du bras du pantographe 216, dans un but de clarté. Néanmoins, en pratique, cette conduite est avantageusement fixée le long de ce bras 216 de manière à s'adapter aux variations d'altitude du pantographe. Par ailleurs, le circuit de détection 13, placé en aval du circuit 11, est alimenté en fluide à partir de l'autre extrémité du circuit 11, par une conduite de liaison 15. L'autre extrémité du circuit 13 est obturée. Chaque bande de frottement 10 et 12 est apte à être fixée sur le corps de l'archet 214, par tous moyens appropriés.

La vanne principale 20 comprend deux chambres, à savoir respectivement une chambre principale 24 et une chambre dite pilote 22, qui sont séparées par une membrane 25. La chambre principale 24 est pourvue d'un orifice d'entrée 21, ainsi que d'un orifice de sortie 50, alors que la chambre pilote 22 est pourvue d'un orifice dit pilote 27. Comme on le verra dans ce qui suit, la membrane 25 possède une première position fonctionnelle dite fermée, dans laquelle elle obture l'orifice de sortie, ainsi qu'une seconde position fonctionnelle dite ouverte, dans laquelle elle n'obture pas cet orifice. En particulier, dans cette première position fonctionnelle, la vanne repose sur un siège 29, prévu au voisinage de la sortie de la chambre principale 24.

Il est à souligner que, contrairement aux vannes connues de l'état de la technique, la membrane 25 de la vanne conforme au premier mode de réalisation de l'invention est dépourvue d'orifice calibré. On note par ailleurs 28 la conduite pilote, permettant la fourniture d'air comprimé dans la chambre pilote 22. Cette conduite 28 est raccordée à la conduite de surveillance 14 ci-dessus. De façon avantageuse, les sections respectives de ces conduites 14 et 28 sont identiques, ce qui garantit une plus grande simplicité de fabrication ainsi qu'une réduction des coûts.

Ces conduites 14 et 28 sont mises en communication tout d'abord avec une conduite dérivée 30, s'étendant à partir d'une conduite principale d'admission 18, s'étendant depuis la ligne 208 en parallèle avec la ligne d'alimentation 220. Par ailleurs ces conduites 14 et 28 sont mises en communication avec une conduite d'alimentation dite provisoire 32, placée en parallèle avec la conduite dérivée 30.

Cette conduite dérivée 30 est équipée d'une restriction 34, de sorte que sa section de passage est calibrée tout en étant nettement inférieure à celle des conduites 18 et 14. Par ailleurs, la conduite 32 présente avantageusement une section bien supérieure à la restriction 34, de façon à assurer une augmentation efficace de la pression dans la chambre pilote, lors de la phase initiale, comme on le verra plus en détail dans ce qui suit. En outre, également de façon avantageuse, la section de la conduite 32 est inférieure à celle de la conduite 44 décrite ci-après, notamment pour des raisons de coûts.

La conduite secondaire 32 s'étend, à son extrémité amont, à partir d'une première sortie du distributeur principal 40. De façon connue en soi, comme montré notamment sur la figure 1, ce distributeur 40 comprend un tiroir 41 monté coulissant à l'encontre d'un ressort 43. L'entrée de ce distributeur est formée par l'extrémité aval d'une conduite de liaison 42, qui s'étend à partir de la conduite d'admission 18 mentionnée ci-dessus, en présentant avantageusement la même section. L'autre sortie du distributeur 40 est formée par l'extrémité amont d'une conduite 44 permettant l'alimentation de la chambre principale 24 de la vanne via son orifice d'entrée 21. Enfin ce distributeur 40 comprend une conduite de commande 54, qui va être détaillée ci-après. De façon classique, en fonction de la pression du fluide dans cette conduite de commande, le tiroir 41 est susceptible d'adopter deux positions fonctionnelles. Ce tiroir assure ainsi la mise en communication sélective entre, d'une part, la conduite de liaison 42 et, d'autre part, soit la conduite secondaire 32 soit la conduite 44 d'alimentation de la chambre principale 24.

La conduite 44 présente une section bien supérieure à celle de la conduite 32, décrite ci-dessus. De manière générale, l'homme du métier choisira une section élevée pour les différentes conduites 220, 18, 42 et 44 de façon à autoriser une évacuation rapide de l'air hors du coussin, lors de la seconde phase de mise en oeuvre décrite ci-après. Enfin la chambre principale dispose d'un orifice de sortie 50, de type connu en soi, dont la section est supérieure ou égale à celle des différentes conduites évoquées ci-dessus.

Le distributeur principal 40 est commandé par un distributeur intermédiaire 52, via la conduite de commande 54 ci-dessus. Ce distributeur intermédiaire 52 possède un tiroir 53, monté coulissant à l'encontre d'un ressort 55. De manière classique, en fonction de la position de ce tiroir 53, l'entrée du distributeur 52, laquelle est formée par une conduite 57 piquée sur la conduite 42, peut être mise en communication sélective avec l'une des sorties de ce distributeur. La première sortie de ce distributeur est formée par la conduite 54, dont on a vu qu'elle assure la commande du distributeur principal. Par ailleurs, la seconde sortie de ce distributeur est obturée par un bouchon 59.

La commande de ce distributeur intermédiaire est raccordée, via une conduite de commande 56, à la chambre de réserve 60. Cette dernière est alimentée, depuis la conduite 42, par une ligne dite de réserve 62. Cette ligne 62 est équipée d'une restriction 64, dont la section est nettement inférieure à celle de la conduite 42 ci-dessus.

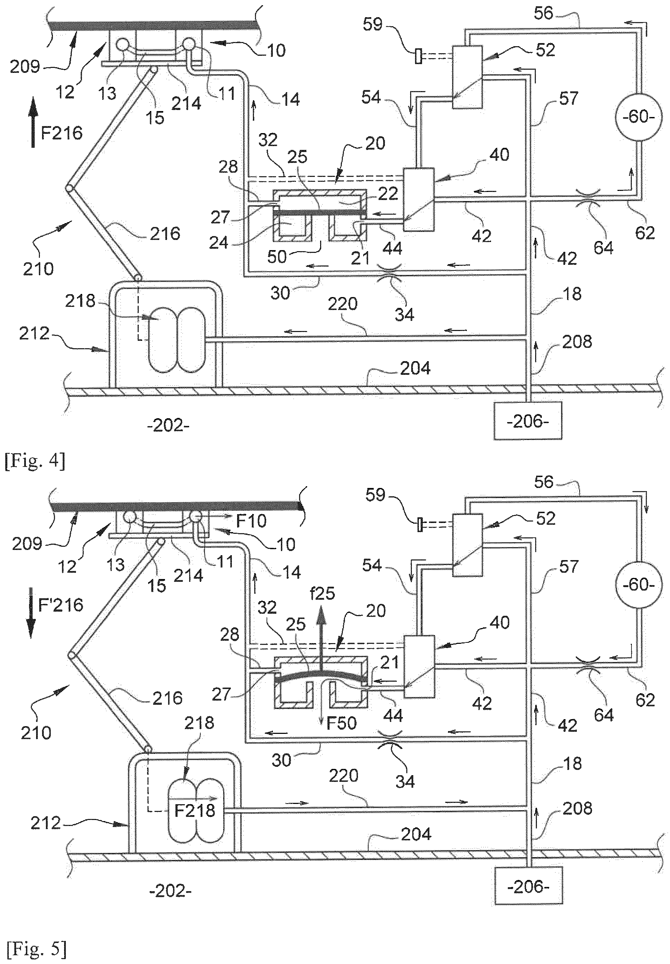

Lorsque la pression dite de commande, dans la ligne de commande 56, est inférieure à une première valeur prédéterminée, notée P1, le distributeur intermédiaire 52 est dans sa configuration illustrée notamment sur la figure 2. Puis, lorsque la pression de commande devient supérieure à cette première valeur, le distributeur intermédiaire bascule dans sa configuration illustrée de façon schématique sur la figure 3. Par ailleurs, lorsque la pression de commande baisse à nouveau, jusqu'à devenir inférieure à une seconde valeur prédéterminée P2, le distributeur intermédiaire 52 bascule à nouveau vers sa première configuration fonctionnelle de la figure 2. À titre d'exemples non limitatifs, la seconde valeur prédéterminée P2 peut être légèrement inférieure à la première valeur prédéterminée P1, de façon à éviter des phénomènes intempestifs d'oscillation du distributeur 52.

On notera que, contrairement au distributeur principal 40, ce distributeur intermédiaire 52 est réglable, ce qui est matérialisé par la flèche associée au ressort 55. Par conséquent, ce distributeur 52 est du type manostat pneumatique. Ainsi, par exemple grâce à une molette de réglage, on peut faire varier les deux valeurs prédéterminées ci-dessus, permettant la commande du distributeur 52. L'hystérésis, différence de valeur entre P1 et P2, est généralement fixe et n'est pas réglable. De façon connue en soi, on peut prévoir des moyens de réglage, qui permettent de faire varier ces valeurs prédéterminées indépendamment l'une de l'autre, en combinant deux manostats pneumatiques.

Dans l'exemple décrit et représenté, les distributeurs respectivement principal 40 et intermédiaire 52 sont de type à tiroirs. À titre d'alternative non représentée, l'invention trouve son application à d'autres types de distributeurs, connus de l'homme du métier. On citera notamment, de façon non limitative, les distributeurs à clapets.

À titre d'exemples non limitatifs, on donne ci-dessous les valeurs numériques suivantes :
- section de chaque conduite 18, 42 et 44 : entre 8mm (millimètres) et 15mm, typiquement voisine de 10mm ;
- section de la conduite 32 : entre 4mm et 6mm, typiquement voisine de 4mm ;
- section de la restriction 34 : entre 0,4mm et 1,2mm, typiquement voisine de 0,7mm ;
- section de la restriction 64 : entre 0,2mm et 0,7mm, typiquement voisine de 0,4mm ;
- section de chaque conduite 14 et 28 : entre 4mm et 6mm, typiquement voisine de 4mm ;
- volume de la chambre de réserve 60 : entre 0,2L (litre) et 1,0L, typiquement voisin de 0,4L.

La mise en oeuvre du pantographe 210 ci-dessus, équipé du dispositif de descente rapide 1 conforme à l'invention, va maintenant être décrite en référence aux figures 2 et 3. Sur ces figures les conduites, dans lesquelles circule l'air comprimé, sont montrées en traits pointillés. Les autres conduites sont illustrées en traits pleins, l'écoulement d'air comprimé dans ces conduites étant matérialisé par des flèches.

Au fur et à mesure que l'unité de fourniture 206 délivre de l'air comprimé, ce dernier est admis d'une part dans le coussin 218 et, d'autre part, dans la conduite 18. Il y a alors accumulation, à la fois dans la chambre de réserve 60 et dans la conduite de commande 56, de cet air comprimé dont la pression augmente progressivement. Dans un premier temps, cette pression d'air comprimé est inférieure à la première valeur prédéterminée P1 ci-dessus. Par conséquent cet air comprimé, présent à une faible pression dans la conduite de commande 56, ne permet pas de déplacer le tiroir 53. Dans ces conditions, la conduite d'entrée 57 est obturée par le bouchon 59.

L'autre conduite de sortie 54, formant comme on l'a vu ci-dessus la commande du distributeur principal, n'est donc pas alimentée en fluide. Ainsi, le tiroir 41 du distributeur principal 40 est maintenu dans sa position de la figure 2. Par conséquent, l'air comprimé est admis uniquement dans la chambre pilote 22. Le distributeur 40 se trouve donc dans sa première position fonctionnelle dite de condamnation temporaire, dans laquelle il condamne la conduite 44 alimentant la chambre principale 24. Cette phase de condamnation temporaire correspond aussi à une phase d'alimentation, dite provisoire, de la conduite 32 en air comprimé alimentant la chambre pilote 22.

Ainsi, selon l'invention, dans cette première phase de montée du pantographe, la chambre pilote se trouve remplie de façon rapide grâce à la conduite secondaire 32 précitée. Cela est à comparer avec l'art antérieur cité précédemment, dans lequel la chambre pilote est remplie lentement au travers d'un trou calibré de faible diamètre ménagé dans la membrane. À cet égard on notera que, grâce à l'invention, la conduite secondaire 32 est susceptible de présenter un diamètre bien supérieur à celui du trou calibré, ce qui autorise le remplissage bien plus rapide de la chambre pilote.

La pression régnant dans cette chambre pilote 22 est alors nettement plus élevée, que celle régnant dans la chambre principale 24. Cela permet ainsi de plaquer fermement la membrane 25 sur son siège 29, ce qui est matérialisé par la flèche F25 sur cette figure 2. D'autre part, à la différence de l'art antérieur, la chambre principale n'étant plus alimentée en fluide, le fluide alimentant le coussin de déploiement ne peut plus s'échapper par la vanne. La montée du pantographe est ainsi mise en œuvre de manière fiable, puisque le coussin est en permanence alimenté en air comprimé à une pression suffisante.

Au terme de cette phase initiale de montée, matérialisée par la flèche F216 sur la figure 2, le bras articulé atteint sa position déployée de manière à mettre en contact les bandes 10 et 12 avec la caténaire. Cette position déployée est en particulier illustrée sur la figure 3. En parallèle la pression d'air comprimé dans la conduite de commande 56 continue à augmenter, jusqu'à dépasser la première valeur prédéterminée P1 ci-dessus. Par conséquent, le tiroir 53 du distributeur auxiliaire 52 coulisse, de manière à mettre désormais en communication la conduite d'entrée 57 avec la ligne de commande 54. L'air comprimé, circulant désormais dans cette ligne 54, a pour effet de déplacer à son tour le tiroir 41 du distributeur principal 40. Ce dernier se trouve dans sa seconde position fonctionnelle dite de fourniture, dans laquelle il permet la fourniture d'air comprimé en direction de la chambre principale 24.

L'air comprimé s'écoule alors dans la conduite 44 en direction de la chambre principale 24, alors que la chambre pilote 22 est uniquement alimentée par la conduite dérivée 30 dont le débit est limité par la restriction 34. Cette dernière conduite 30 permet de pallier les éventuelles légères fuites du circuit de surveillance d'usure des bandes, à savoir les tubes 11 et 13, la chambre pilote 22 et les conduites associées. Dans l'art antérieur, cité dans la partie introductive de la présente description, le trou calibré de la membrane permet certes de réaliser cette fonction. Néanmoins, il doit aussi permettre le remplissage initial du circuit de surveillance.

On peut donc considérer que le diamètre du trou calibré est le résultat d'un compromis entre la vitesse de remplissage et la sensibilité de détection d'une fuite du tube 11 ou 13, due à l'usure de la bande 10 ou 12. Un diamètre élevé permet certes de remplir rapidement le circuit de surveillance, assurant ainsi la montée du pantographe. En revanche, cette montée efficace s'effectue au détriment d'une perte importante de sensibilité de détection. Au contraire, un trop petit diamètre ne permet pas de remplir suffisamment rapidement la chambre pilote, qui ne pourra donc pas s'opposer à l'effort dû à la pression dans la chambre principale rendant impossible la montée du pantographe. L'invention présente avantageusement un découplage entre, d'une part, le remplissage du circuit de surveillance réalisé par la conduite secondaire 32 et, d'autre part, la compensation des éventuelles légères fuites autorisée par la conduite dérivée 30 munie de la restriction 34. En conséquence, grâce à l'invention, le diamètre de la restriction 34 peut avantageusement être inférieur à celui du trou calibré de la membrane prévu dans l'art antérieur, ce qui offre ainsi une meilleure sensibilité de détection d'usure des bandes. La chambre pilote 22 se trouve remplie préalablement à la chambre principale 24, alors que la membrane possède en outre une surface, en regard de la chambre pilote, qui est supérieure à celle en regard de la chambre principale. De ce fait, l'effort appliqué sur la membrane dans la chambre pilote est toujours supérieur à celui appliqué sur la membrane dans la chambre principale, correspondant à la flèche F25 ci-dessus. Il en résulte que l'orifice de sortie de la chambre principale est maintenu constamment fermé, grâce au plaquage ferme de la membrane sur le siège 29. Ainsi, lors la montée complète du pantographe, l'invention permet de supprimer de façon sensiblement totale les fuites observées au niveau de l'orifice de sortie 50 dans l'art antérieur.

On notera que l'utilisation du distributeur intermédiaire 52 permet de décaler temporellement le passage du distributeur principal 40, depuis sa position de condamnation vers sa position de fourniture, par rapport à l'occurrence d'un événement représentatif du déploiement du pantographe. Dans l'exemple illustré, cet événement correspond à l'instant où les moyens de fourniture 206 commencent à fournir du fluide. À titre de variante, cet événement peut correspondre au moment où le pantographe quitte sa position basse. Par exemple, une came montée sur l'axe d'articulation entre le bras inférieur et le châssis 212 commande le distributeur principal 40 dans sa position de fourniture, lorsque le pantographe atteint une élévation déterminée par la came. Dans ce cas, le distributeur 40 dispose alors d'une commande mécanique au lieu d'une commande pneumatique. Le distributeur auxiliaire, la réserve 60 et les conduites associées sont alors optionnels.

En cas d'usure critique d'une des bandes de frottement 10 et 12, le tube inséré dans cette dernière est percé et mis à la pression atmosphérique de manière connue en soi. Il s'agit par exemple de la bande 10, ce qui est montré par la flèche F10 sur la figure 4. Par conséquent, la chambre pilote 22 n'est sensiblement plus alimentée en air comprimé, puisque l'air fournie par la conduite dérivée 30 munie de la restriction 34 ne suffit pas à compenser la fuite au niveau de la bande. La pression de la chambre principale 24 exerce alors une force supérieure à celle de la chambre pilote. En conséquence, la membrane 25 se soulève selon la flèche f25 à la figure 4, de sorte que l'air comprimé s'évacue par l'orifice 50 de la vanne 20 selon la flèche F50. La chambre principale étant raccordée au coussin de déploiement par les conduites successives 220, 18, 42 et 44, ce dernier se trouve donc mis à la pression atmosphérique, ce qui est montré par la flèche F218. Cela fait descendre le bras articulé 216, selon la flèche F'216 sur cette même figure 4.

En parallèle, l'air s'évacue hors de la chambre de réserve 60. Cependant, étant donné la présence de la restriction 64 de très faible section, cette évacuation s'opère à un débit très faible de sorte que la pression dans la ligne de commande 56 diminue très lentement. Dans ces conditions, le distributeur intermédiaire 52 ne revient pas immédiatement dans sa configuration initiale montrée sur la figure 2. De façon incidente, le distributeur principal 40 ne retourne pas non plus dans sa configuration de condamnation, représentée sur cette même figure 2.

En d'autres termes, il existe un décalage temporel entre, d'une part, l'occurrence d'un événement représentatif du repliement du pantographe et, d'autre part, le retour du distributeur dans sa configuration de condamnation. Dans l'exemple illustré, cet événement correspond à la mise à la pression atmosphérique de la bande de frottement. Néanmoins, à titre de variante, on peut prévoir que cet événement correspond à l'instant où le pantographe rejoint sa position basse. Par exemple, une came montée sur l'axe d'articulation entre le bras inférieur et le châssis 212 commande le distributeur principal 40 dans sa position de condamnation lorsque le pantographe revient en dessous d'une élévation déterminée par la came. Dans ce cas, le distributeur 40 dispose alors d'une commande mécanique au lieu d'une commande pneumatique ; le distributeur auxiliaire, la réserve 60 et les conduites associées n'étant plus nécessaires.

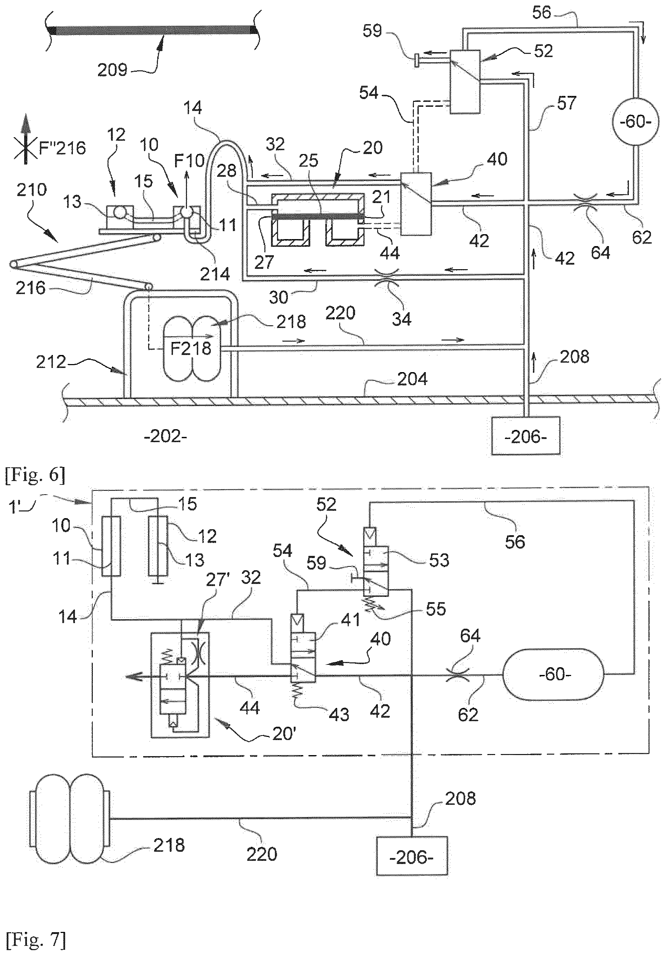

Enfin, une fois que la pression dans la chambre 60 et la ligne de commande 56 a substantiellement diminué, le distributeur 52 revient dans sa configuration initiale montrée sur la figure 2. De ce fait, le distributeur principal 40 est basculé dans sa configuration initiale de condamnation. Comme cela ressort de ce qui précède, ce basculement a lieu après une évacuation importante d'air hors du coussin provoquant une descente du pantographe jusqu'à sa position initiale. On soulignera en outre que, dans cette configuration, le bras articulé ne peut pas remonter. En effet, étant donné que les bandes 10 et 12 sont toujours mises à la pression atmosphérique, il en va de même pour le coussin dont la pression ne peut par conséquent pas augmenter. Dans ces conditions, ce coussin ne peut pas remplir sa fonction de déploiement du bras, comme cela est matérialisé par la flèche barrée F"216 sur la figure 5.

Cela est tout particulièrement avantageux, puisque cela évite à l'archet, équipé des bandes de frottement désormais défectueuses, de venir au contact de la caténaire. Ainsi, l'invention permet de s'affranchir de tout risque d'accrochage entre cet archet et la caténaire et, plus généralement, de toute détérioration de cette dernière.

Les figures 6 à 8 illustrent trois autres modes de réalisation de l'invention. Sur ces figures 6 à 8, les éléments mécaniques identiques à ceux des figures 1 à 5 possèdent les mêmes numéros de référence, seuls les éléments mécaniques différents étant affectés du suffixe « prime » ( ' ), « seconde » ( " ) et « tierce » (‴).

Le dispositif 1' de la figure 6 diffère de celle des figures précédentes, en particulier en ce qu'il est dépourvu de la conduite dérivée 30 équipée de la restriction 34. Contrairement au dispositif 1 des figures 1 à 5, la membrane 25' de la vanne 20' est percée d'un orifice 27', comme dans l'état de la technique. À titre d'exemple, la section de cet orifice 27' est comprise entre 0,7 mm et 1,2mm.

La mise en œuvre du dispositif de descente rapide 1', conforme à cette variante de la figure 6, est globalement analogue à celle du dispositif 1 décrit ci-dessus. On notera cependant que cette variante de la figure 6 est moins préférée que le mode de réalisation principal des figures 1 à 5. En effet, lors de la mise en œuvre du dispositif 1 montré sur ces figures, les distributeurs 40, 52 et la vanne 20 sont montés préférentiellement sur une platine pneumatique, qui est connue en soi. De manière typique cette dernière se présente sous forme d'un bloc métallique dans lequel sont réalisées, par tous moyens appropriés, les conduites 18, 28, 30, 32, 42, 44, 54, 56, 57,62, les restrictions 34, 64 ainsi que la réserve 60.

Cette platine pneumatique permet d'obtenir une meilleure fiabilité du système car elle réduit le risque de fuite en limitant les raccords. Elle permet aussi une réduction du prix de revient du système de descente rapide. L'emploi d'une vanne sans membrane percée d'un trou calibré contribue à une meilleure fiabilité et à un coût moindre. Toutefois, cette variante permet la rénovation à moindre coût d'un pantographe équipé selon d'un dispositif de descente rapide selon l'art antérieur en réutilisant la vanne 20'.

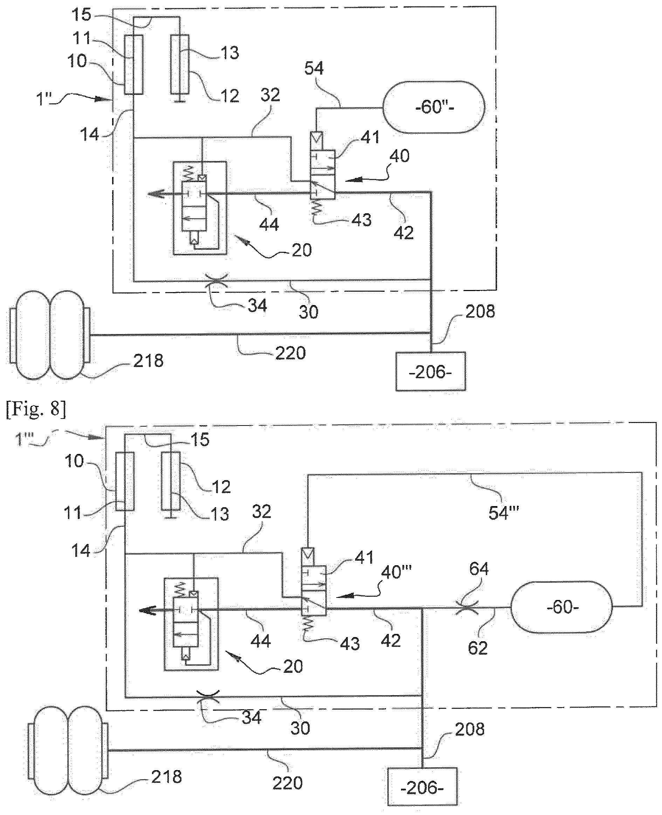

Le dispositif 1" de la figure 7 diffère de celui des figures précédentes, en particulier en ce qu'il est dépourvu d'une chambre de réserve, ainsi que de la conduite de réserve et du distributeur intermédiaire qui lui sont associés dans le premier mode de réalisation principal. Sur cette figure 7 on a illustré de manière schématique un retardateur 60", de tout type approprié.

En service, on suppose tout d'abord que le distributeur 40 est dans sa position active, analogue à celle de la figure 2, ce qui permet de faire monter le pantographe comme cela a été décrit ci-dessus. Le retardateur est apte à faire passer ce distributeur dans sa position inactive au terme d'une durée prédéterminée, qui est typiquement comprise entre 6 et 10 secondes. Par ailleurs, dans le cas d'une mise à l'atmosphère d'une des bandes de frottement, ce retardateur 60" est apte à décaler temporairement le retour du distributeur, dans sa position active. De façon typique, une durée comprise par exemple entre 6s et 10s est observée à partir de l'instant de mise à l'atmosphère, avant de faire basculer le distributeur dans sa position active.

Le retardateur 60" peut être de type mécanique comme par exemple, une came montée sur l'axe d'articulation entre le bras inférieur et le châssis 212 qui commande le distributeur principal 40", dans sa position de fourniture lorsque le pantographe atteint une élévation déterminée par la came, dans sa position de condamnation lorsque le pantographe revient en dessous d'une élévation déterminée par la came. Le distributeur 40" dispose alors d'une commande mécanique au lieu d'une commande pneumatique. Bien que la came détermine une élévation du pantographe, cette élévation correspond à un décalage temporel déterminé étant donné que l'unité de fourniture en fluide est généralement équipée d'un régulateur de débit.

À titre de variante non représentée, on peut également prévoir de combiner les variantes des figures 6 et 7. En d'autres termes, dans cette variante supplémentaire, la membrane est percée d'un orifice comme celui 27' de la figure 6, alors que le dispositif est équipé d'un retardateur analogue à celui 60" de la figure 7.

Dans le mode de réalisation représenté à la figure 8, on remplace avantageusement les deux distributeurs 40 et 52 par un distributeur unique 40‴ dont les valeurs de commande P1 et P2 sont fixées au préalable par construction. Cette variante, qui est avantageuse au niveau économique, est envisageable en particulier lorsque la pression de pilotage est connue. Ce mode de réalisation de la figure 8 peut ainsi se prêter à une industrialisation à grande échelle, en particulier lorsqu'il est combiné à la platine pneumatique décrite ci-dessus.

Le dispositif de descente rapide, conforme à l'invention, peut tout d'abord être installé sur un pantographe de première monte. À titre d'alternative, il peut également équiper un pantographe existant. Dans cet esprit, ce pantographe existant peut être initialement dépourvu d'un dispositif de descente rapide. Un tel pantographe peut également être équipé d'un dispositif de descente rapide usagé, en particulier selon l'état de la technique, auquel cas le dispositif de l'invention remplace alors ce dispositif usagé.

L'invention n'est pas limitée aux exemples décrits et représentés.

Ainsi, dans les modes de réalisation ci-dessus, la phase de condamnation temporaire du distributeur 40 est simultanée avec la phase d'alimentation provisoire, par la conduite 32. À titre de variante, on peut cependant prévoir un décalage entre cette condamnation temporaire et cette alimentation provisoire. En particulier, le début de la phase d'alimentation provisoire peut être décalé dans le temps selon une durée prédéterminée, par rapport au début de la phase de condamnation temporaire.

Dans les modes de réalisation ci-dessus la vanne 20, dont la membrane 25 est dépourvue d'orifice, se trouve combinée avec des moyens de condamnation temporaire de l'alimentation en fluide de la chambre principale. Cependant, à titre de variante non représentée, on peut prévoir qu'une telle vanne, dans la membrane ne présente pas d'orifice, peut être mise en place dans un dispositif de descente rapide qui ne possède pas de tels moyens de condamnation temporaire.

## Revendications

1. Dispositif de descente rapide (1 ; 1' ; 1" ; 1‴) pour pantographe (210), ce pantographe comprenant un châssis (212), un archet (214) destiné à être placé contre une caténaire (209), un bras articulé (216) reliant l'archet au châssis, des moyens de déploiement (218) du bras articulé mis en communication avec des moyens de fourniture (206), appartenant à un véhicule ferroviaire (200) équipé de ce pantographe, ces moyens de fourniture étant aptes à fournir un fluide comprimé, en particulier de l'air comprimé,
ce dispositif de descente rapide comprenant :
- une vanne (20) comportant deux chambres (22, 24), qui sont séparées par une membrane (25), la première chambre dite pilote (22) comprenant un orifice de pilotage (27) de la vanne, la seconde chambre dite principale (24) comprenant un orifice d'entrée (21) et d'un orifice de sortie (50), ledit orifice de sortie permettant l'évacuation du fluide à l'atmosphère, cette membrane possédant une première position fonctionnelle dite fermée dans laquelle elle obture l'orifice de sortie, ainsi qu'une seconde position fonctionnelle dite ouverte dans laquelle elle n'obture pas l'orifice de sortie,
- au moins une bande de frottement (10, 12) apte à être fixée sur le corps de l'archet, cette bande de frottement étant destinée à entrer en contact avec la caténaire et étant équipée d'un circuit de détection de dégradation (11, 13) configuré pour être alimenté par ledit fluide,
- au moins une conduite de fourniture (44) destinée à fournir du fluide à la chambre principale par son orifice d'entrée, chaque conduite de fourniture étant configurée pour être mise en communication par le fluide avec les moyens de fourniture,
- au moins une conduite d'alimentation (30, 32) destinée à alimenter du fluide à la chambre pilote, chaque conduite d'alimentation étant configurée pour être mise en communication par le fluide avec les moyens de fourniture,
- au moins une conduite de surveillance (14) s'étendant à partir de la chambre pilote (22) de la vanne, pour alimenter un circuit respectif de détection de dégradation des bandes de frottement (10,12),
- des moyens (220, 18, 42, 44) de raccordement, configurés pour raccorder par le fluide les moyens de déploiement (218) et la chambre principale (24), de manière à ce qu'au moins une partie substantielle du fluide comprimé est évacuée hors des moyens de déploiement, lorsque la membrane (25) se trouve dans la deuxième position fonctionnelle dite ouverte,
ce dispositif de descente rapide comprenant en outre des moyens (40) de condamnation temporaire de l'alimentation en fluide de la chambre principale.

2. Dispositif de descente rapide selon la revendication 1, dans lequel ladite membrane (25) de la vanne (20) est dépourvue d'orifice.

3. Dispositif de descente rapide selon l'une des revendications précédentes, dans lequel les moyens de condamnation temporaire sont des moyens (40) de fermeture temporaire de la conduite de fourniture (44).

4. Dispositif de descente rapide selon l'une des revendications précédentes, comprenant des moyens (40) d'alimentation provisoire en fluide de la chambre pilote (22), ces moyens d'alimentation provisoire étant des moyens d'ouverture provisoire (40) d'une conduite d'alimentation dite provisoire (32), reliant ces moyens d'ouverture provisoire (40) et l'orifice de pilotage de la vanne.

5. Dispositif de descente rapide selon l'une des revendications précédentes, comprenant une conduite d'alimentation dite dérivée (30) débouchant dans l'orifice de pilotage de la vanne, cette conduite d'alimentation dérivée étant mise en communication par le fluide avec les moyens de fourniture, cette conduite dérivée possédant une restriction (34) dont la section est bien inférieure à la section de la conduite de surveillance (14).

6. Dispositif selon les revendications 4 et 5, dans lequel les moyens de fermeture temporaire et d'ouverture provisoire comprennent un distributeur principal (40) reliant les moyens de fourniture (206), soit à la conduite d'alimentation provisoire (32) dans une première position de distribution dite temporaire, soit à la conduite de fourniture (44) dans une seconde position de distribution dite nominale.

7. Dispositif selon la revendication précédente, comprenant des premiers moyens de décalage temporel (60, 60", 62, 64), qui sont aptes à décaler le passage du distributeur principal de sa position temporaire à sa position nominale de distribution, par rapport à l'occurrence d'un événement représentatif du déploiement du pantographe, l'événement représentatif du déploiement du pantographe étant en particulier l'instant où les moyens de fourniture commencent à fournir du fluide, ou encore en particulier l'instant où le pantographe quitte sa position basse.

8. Dispositif selon la revendication 7, comprenant en outre des seconds moyens de décalage temporel (60, 60", 62, 64), qui sont aptes à décaler le passage du distributeur principal de sa position nominale à sa position temporaire de distribution, par rapport à l'occurrence d'un événement représentatif du repliement du pantographe, l'événement représentatif du repliement du pantographe étant en particulier l'instant de mise à la pression atmosphérique de la bande de frottement, ou encore en particulier l'instant où le pantographe rejoint sa position basse,

9. Dispositif selon les revendications 7 et 8, dans lequel les premiers moyens de décalage temporel sont communs avec les seconds moyens de décalage temporel, sachant que de préférence les moyens communs de décalage temporel comprennent :
- une chambre de réserve (60),
- une conduite de réserve (62) reliée aux moyens de fourniture et alimentant cette chambre de réserve, cette conduite de réserve possédant une restriction de section (64),
- ainsi qu'un moyen de commande apte à positionner le distributeur principal dans sa position temporaire lorsque la pression dans la chambre de réserve est inférieure à une première valeur de consigne, ce moyen de commande étant en outre apte à positionner le distributeur principal dans sa position nominale lorsque la pression dans la chambre de réserve est supérieure à une seconde valeur de consigne.

10. Dispositif selon la revendication précédente, dans lequel les moyens de commande comprennent une conduite de commande principale (54‴) reliant la chambre de réserve à l'entrée de commande du distributeur principal, sachant que de préférence les moyens de commande comprennent en outre un distributeur intermédiaire (52), la conduite de commande principale s'étendant à partir d'une sortie de ce distributeur intermédiaire, ce distributeur intermédiaire comprenant une conduite de commande intermédiaire (56) s'étendant à partir de la chambre de réserve (60).

11. Pantographe (210) comprenant un châssis (212), un archet (214) destiné à être placé contre une caténaire (209), un bras articulé (216) reliant l'archet au châssis, des moyens de déploiement (218) du bras articulé mis en communication avec des moyens de fourniture (206), appartenant à un véhicule ferroviaire (200) équipé de ce pantographe, ces moyens de fourniture étant aptes à fournir un fluide comprimé, en particulier de l'air comprimé, ce pantographe comprenant en outre un dispositif de descente rapide selon l'une quelconque des revendications précédentes.

12. Procédé de mise en œuvre d'un pantographe selon la revendication précédente, comprenant une étape de fourniture d'un pantographe selon la revendication précédente et dans quel procédé on place les moyens de condamnation temporaire dans une configuration active dite de condamnation, de manière à déployer le bras articulé et à mettre en contact chaque bande de frottement avec la caténaire, puis on fait passer ces moyens de condamnation temporaire dans leur configuration inactive dite de fourniture, postérieurement à l'occurrence d'un événement représentatif du déploiement du pantographe, l'événement représentatif du déploiement du pantographe étant en particulier l'instant où les moyens de fourniture commencent à fournir du fluide, ou encore en particulier l'instant où le pantographe quitte sa position basse, sachant que de préférence on place à nouveau les moyens de condamnation temporaire dans leur configuration active, postérieurement à l'occurrence d'un événement représentatif du repliement du pantographe, l'événement représentatif du repliement du pantographe étant en particulier l'instant de mise à la pression atmosphérique de la bande de frottement, ou encore en particulier l'instant où le pantographe rejoint sa position basse.

13. Procédé d'amélioration d'un pantographe comprenant un châssis (212), un archet (214) destiné à être placé contre une caténaire (209), un bras articulé (216) reliant l'archet au châssis, des moyens de déploiement (218) du bras articulé mis en communication avec des moyens de fourniture (206), appartenant à un véhicule ferroviaire (200) équipé de ce pantographe, ces moyens de fourniture étant aptes à fournir un fluide comprimé, en particulier de l'air comprimé, procédé dans lequel on installe un dispositif de descente rapide selon l'une des revendications 1 à 10 et, en particulier dans lequel le pantographe existant est équipé d'un dispositif de descente rapide existant, à l'état usagé, auquel cas on remplace ce dispositif existant par le dispositif selon l'une des revendications 1 à 10.

14. Véhicule ferroviaire (200) comportant un toit (204), ainsi qu'un pantographe (210) selon la revendication 11, le châssis (212) du pantographe étant fixé sur le toit dudit véhicule ferroviaire.

## Patentansprüche

1. Vorrichtung zur schnellen Absenkung (1; 1'; 1"; 1‴) für einen Stromabnehmer (210), wobei dieser Stromabnehmer ein Gestell (212) umfasst, einen Bogen (214), der dazu bestimmt ist, an eine Oberleitung (209) angelegt zu werden, einen Gelenkarm (216), der den Bogen mit dem Gestell verbindet, Mittel zum Entfalten (218) des Gelenkarmes, die in Verbindung mit Bereitstellungsmitteln (206) gebracht werden, einem Schienenfahrzeug (200) angehörend, das mit diesem Stromabnehmer ausgerüstet ist, wobei diese Bereitstellungsmittel imstande sind, ein Druckfluid, insbesondere Druckluft bereitzustellen,
wobei diese Vorrichtung zur schnellen Absenkung Folgendes umfasst:
- ein Ventil (20), das zwei Kammern (22, 24) beinhaltet, die durch eine Membran (25) getrennt sind, wobei die erste sogenannte Steuerkammer (22) eine Steueröffnung (27) für das Ventil umfasst, die zweite sogenannte Hauptkammer (24) eine Eingangsöffnung (21) und eine Ausgangsöffnung (50) umfasst, wobei die Ausgangsöffnung das Austragen des Fluids in die Atmosphäre ermöglicht, wobei diese Membran eine erste sogenannte geschlossene Betriebsposition besitzt, in der sie die Ausgangsöffnung verschließt, sowie eine zweite sogenannte offene Betriebsposition, in der sie die Ausgangsöffnung nicht verschließt,
- mindestens ein Schleifband (10, 12), das imstande ist, auf dem Bogenkörper fixiert zu werden, wobei dieses Schleifband dazu bestimmt ist, in Kontakt mit der Oberleitung zu treten, und mit einer Beschädigungserkennungsschaltung (11, 13) ausgerüstet ist, die konfiguriert ist, um mit dem Fluid versorgt zu werden,
- mindestens eine Bereitstellungsleitung (44), die dazu bestimmt ist, der Hauptkammer durch deren Eingangsöffnung Fluid bereitzustellen, wobei jede Bereitstellungsleitung konfiguriert ist, um durch das Fluid mit den Bereitstellungsmitteln in Verbindung gebracht zu werden,
- mindestens eine Versorgungsleitung (30, 32), die dazu bestimmt ist, die Steuerkammer mit Fluid zu versorgen, wobei jede Versorgungsleitung konfiguriert ist, um durch das Fluid mit den Bereitstellungsmitteln in Verbindung gebracht zu werden,
- mindestens eine Überwachungsleitung (14), die sich aus der Steuerkammer (22) des Ventils erstreckt, um eine jeweilige Beschädigungserkennungsschaltung der Schleifbänder (10, 12) zu versorgen,
- Anschlussmittel (220, 18, 42, 44), die konfiguriert sind, um die Mittel zum Entfalten (218) und die Hauptkammer (24) durch das Fluid anzuschließen, sodass mindestens ein wesentlicher Teil des Druckfluids aus den Mitteln zum Entfalten ausgetragen wird, wenn sich die Membran (25) in der zweiten sogenannten offenen Betriebsposition befindet, wobei diese Vorrichtung zur schnellen Absenkung weiter Mittel (40) zum vorübergehenden Sperren der Fluidversorgung der Hauptkammer umfasst.

2. Vorrichtung zur schnellen Absenkung nach Anspruch 1, wobei die Membran (25) des Ventils (20) mit keiner Öffnung versehen ist.

3. Vorrichtung zur schnellen Absenkung nach einem der vorstehenden Ansprüche, wobei die Mittel zum vorübergehenden Sperren Mittel (40) zum vorübergehenden Schließen der Bereitstellungsleitung (44) sind.

4. Vorrichtung zur schnellen Absenkung nach einem der vorstehenden Ansprüche, Mittel (40) zum provisorischen Versorgen der Steuerkammer (22) mit Fluid umfassend, wobei diese Mittel zum provisorischen Versorgen Mittel zum provisorischen Öffnen (40) einer sogenannten provisorischen Versorgungsleitung (32) sind, die diese Mittel zum provisorischen Öffnen (40) und die Steueröffnung des Ventils verbinden.

5. Vorrichtung zur schnellen Absenkung nach einem der vorstehenden Ansprüche, umfassend eine sogenannte abgeleitete Versorgungsleitung (30), die in die Steueröffnung des Ventils mündet, wobei diese abgeleitete Versorgungsleitung durch das Fluid mit den Bereitstellungsmitteln in Verbindung gebracht wird, wobei diese abgeleitete Leitung eine Einengung (34) besitzt, deren Querschnitt kleiner als der Querschnitt der Überwachungsleitung (14) ist.

6. Vorrichtung nach den Ansprüchen 4 und 5, wobei die Mittel zum vorübergehenden Schließen und provisorischen Öffnen einen Hauptverteiler (40) umfassen, der die Bereitstellungsmittel (206) entweder mit der provisorischen Versorgungsleitung (32) in einer ersten sogenannten vorübergehenden Verteilungsposition, oder mit der Bereitstellungsleitung (44) in einer zweiten sogenannten nominalen Verteilungsposition verbindet.

7. Vorrichtung nach dem vorstehenden Anspruch, umfassend erste Mittel zur vorübergehenden Verschiebung (60, 60", 62, 64), die imstande sind, den Durchlass des Hauptverteilers von dessen vorübergehender Position in dessen nominale Verteilungsposition in Bezug auf das Auftreten eines repräsentativen Ereignisses für das Entfalten des Stromabnehmers zu verschieben, wobei das repräsentative Ereignis für das Entfalten des Stromabnehmers insbesondere der Zeitpunkt ist, bei dem die Bereitstellungsmittel damit beginnen, Fluid bereitzustellen, oder aber insbesondere der Zeitpunkt, bei dem der Stromabnehmer seine untere Position verlässt.

8. Vorrichtung nach Anspruch 7, weiter umfassend zweite Mittel zur vorübergehenden Verschiebung (60, 60", 62, 64), die imstande sind, den Durchlass des Hauptverteilers von dessen nominaler Position in dessen vorübergehende Verteilungsposition in Bezug auf das Auftreten eines repräsentativen Ereignisses für das Zusammenklappen des Stromabnehmers zu verschieben, wobei das repräsentative Ereignis für das Zusammenklappen des Stromabnehmers insbesondere der Zeitpunkt des Beaufschlagens des Schleifbandes mit atmosphärischem Druck ist, oder aber insbesondere der Zeitpunkt, bei dem der Stromabnehmer seine untere Position einnimmt.

9. Vorrichtung nach den Ansprüchen 7 und 8, wobei die ersten Mittel zur vorübergehenden Verschiebung mit den zweiten Mitteln zur vorübergehenden Verschiebung gemein sind, wobei festzuhalten ist, dass die gemeinsamen Mittel zur vorübergehenden Verschiebung vorzugsweise Folgendes umfassen:
- eine Reservekammer (60),
- eine Reserveleitung (62), die mit den Bereitstellungsmitteln verbunden ist, und diese Reservekammer versorgt, wobei diese Reserveleitung eine Querschnittverengung (64) besitzt,
- sowie ein Steuerungsmittel, das imstande ist, den Hauptverteiler in seiner vorübergehenden Position zu positionieren, wenn der Druck in der Reservekammer geringer als ein erster Sollwert ist, wobei dieses Steuerungsmittel weiter imstande ist, den Hauptverteiler in seiner nominalen Position zu positionieren, wenn der Druck in der Reservekammer höher als ein zweiter Sollwert ist.

10. Vorrichtung nach dem vorstehenden Anspruch, wobei die Steuerungsmittel eine Hauptsteuerungsleitung (54‴) umfassen, die die Reservekammer mit dem Steuerungseingang des Hauptverteilers verbindet, wobei festzuhalten ist, dass die Steuerungsmittel weiter vorzugsweise einen Zwischenverteiler (52) umfassen, wobei sich die Hauptsteuerungsleitung aus einem Ausgang dieses Zwischenverteilers heraus erstreckt, wobei dieser Zwischenverteiler eine Zwischensteuerungsleitung (56) umfasst, die sich aus der Reservekammer (60) heraus erstreckt.

11. Stromabnehmer (210), der ein Gestell (212) umfasst, einen Bogen (214), der dazu bestimmt ist, an eine Oberleitung (209) angelegt zu werden, einen Gelenkarm (216), der den Bogen mit dem Gestell verbindet, Mittel zum Entfalten (218) des Gelenkarmes, die in Verbindung mit Bereitstellungsmitteln (206) gebracht werden, einem Schienenfahrzeug (200) angehörend, das mit diesem Stromabnehmer ausgerüstet ist, wobei diese Bereitstellungsmittel imstande sind, ein Druckfluid, insbesondere Druckluft bereitzustellen, wobei dieser Stromabnehmer weiter eine Vorrichtung zur schnellen Absenkung nach einem der vorstehenden Ansprüche umfasst.

12. Verfahren zur Anwendung eines Stromabnehmers nach dem vorstehenden Anspruch, umfassend einen Schritt zum Bereitstellen eines Stromabnehmers nach dem vorstehenden Anspruch, und wobei bei dem Verfahren die Mittel zum vorübergehenden Sperren in einer sogenannten aktiven Sperrkonfiguration platziert werden, um den Gelenkarm zu entfalten, und jedes Schleifband mit der Oberleitung in Kontakt zu bringen, diese Mittel zum vorübergehenden Sperren danach in ihre sogenannte inaktive Bereitstellungskonfiguration, nach dem Auftreten eines repräsentativen Ereignisses für das Entfalten des Stromabnehmers überführt werden, wobei das repräsentative Ereignis für das Entfalten des Stromabnehmers insbesondere der Zeitpunkt ist, bei dem die Bereitstellungsmittel damit beginnen, Fluid bereitzustellen, oder aber insbesondere der Zeitpunkt, bei dem der Stromabnehmer seine untere Position verlässt,
wobei festzuhalten ist, dass die Mittel zum vorübergehenden Sperren nach dem Auftreten eines repräsentativen Ereignisses für das Zusammenklappen des Stromabnehmers vorzugsweise erneut in ihrer aktiven Konfiguration platziert werden, wobei das repräsentative Ereignis für das Zusammenklappen des Stromabnehmers insbesondere der Zeitpunkt des Beaufschlagens des Schleifbandes mit atmosphärischem Druck ist, oder aber insbesondere der Zeitpunkt, bei dem der Stromabnehmer seine untere Position einnimmt.

13. Verfahren zum Verbessern eines Stromabnehmers, umfassend ein Gestell (212), einen Bogen (214), der dazu bestimmt ist, an eine Oberleitung (209) angelegt zu werden, einen Gelenkarm (216), der den Bogen mit dem Gestell verbindet, Mittel zum Entfalten (218) des Gelenkarmes, die in Verbindung mit Bereitstellungsmitteln (206) gebracht werden, einem Schienenfahrzeug (200) angehörend, das mit diesem Stromabnehmer ausgerüstet ist, wobei diese Bereitstellungsmittel imstande sind, ein Druckfluid, insbesondere Druckluft bereitzustellen,
Verfahren, bei dem eine Vorrichtung zur schnellen Absenkung nach einem der Ansprüche 1 bis 10 eingebaut wird, und wobei der bestehende Stromabnehmer insbesondere mit einer bestehenden Vorrichtung zur schnellen Absenkung im gebrauchten Zustand ausgerüstet ist, wobei in dem Fall diese bestehende Vorrichtung durch die Vorrichtung nach einem der Ansprüche 1 bis 10 ersetzt wird.

14. Schienenfahrzeug (200), das ein Dach (204), sowie einen Stromabnehmer (210) nach Anspruch 11 beinhaltet, wobei das Gestell (212) des Stromabnehmers auf dem Dach des Schienenfahrzeugs befestigt ist.

## Claims

1. A quick descent device (1; 1'; 1"; 1‴) for a pantograph (210), this pantograph comprising a frame (212), a bow (214) intended to be placed against a catenary (209), a hinged arm (216) connecting the bow to the frame, means (218) for deploying the hinged arm communicated with supply means (206), belonging to a rail vehicle (200) equipped with this pantograph, these supply means being capable of supplying a compressed fluid, in particular compressed air, this quick descent device comprising:
- a valve (20) including two chambers (22, 24), which are separated by a membrane (25), the first chamber called pilot chamber (22) comprising an orifice (27) for driving the valve, the second chamber called main chamber (24) comprising an inlet orifice (21) and an outlet orifice (50), said outlet orifice allowing the discharge of the fluid to the atmosphere, this membrane having a first functional position called closed functional position in which it seals the outlet orifice, as well as a second functional position called open functional position in which it does not seal the outlet orifice,
- at least one contact strip (10, 12) capable of being fastened on the body of the bow, this contact strip being intended to come into contact with the catenary and being equipped with a degradation detection circuit (11, 13) configured to be supplied by said fluid,
- at least one supply line (44) intended to supply fluid to the main chamber via the inlet orifice thereof, each supply line being configured to be communicated, by the fluid, with the supply means,
- at least one supply line (30, 32) intended to supply fluid to the pilot chamber, each supply line being configured to be communicated, by the fluid, with the supply means,
- at least one monitoring line (14) extending from the pilot chamber (22) of the valve, to supply a respective circuit for detecting degradation of the contact strips (10,12),
- connecting means (220, 18, 42, 44), configured to connect, by the fluid, the deployment means (218) and the main chamber (24), so that at least one substantial portion of the compressed fluid is discharged from the deployment means, when the membrane (25) is in the second functional position called open functional position,
this quick descent device further comprising means (40) for temporarily blocking the supply of fluid to the main chamber.

2. The quick descent device according to claim 1, wherein said membrane (25) of the valve (20) does not include any orifice.

3. The quick descent device according to one of the preceding claims, wherein the temporary blocking means are means (40) for temporarily closing the supply line (44).

4. The quick descent device according to one of the preceding claims, comprising means (40) for provisionally supplying fluid to the pilot chamber (22), these provisional supply means being means (40) for provisionally opening a supply line called provisional supply line (32), connecting these provisional opening means (40) and the orifice for driving the valve.

5. The quick descent device according to one of the preceding claims, comprising a supply line called branch supply line (30) opening into the orifice for driving the valve, this branch supply line being communicated by the fluid with the supply means, this branch line having a restriction (34) whose section is much smaller than the section of the monitoring line (14).

6. The device according to claims 4 and 5, wherein the temporary closing and provisional opening means comprise a main distributor (40) connecting the supply means (206), either to the provisional supply line (32) in a first distribution position called temporary distribution position, or to the supply line (44) in a second distribution position called nominal distribution position.

7. The device according to the preceding claim, comprising first time shift means (60, 60", 62, 64), which are capable of shifting the passage of the main distributor from its temporary distribution position to its nominal distribution position, relative to the occurrence of an event representative of the deployment of the pantograph, the event representative of the deployment of the pantograph being in particular the moment when the supply means start supplying fluid, or even in particular the moment when the pantograph leaves its low position.

8. The device according to claim 7, further comprising second time shift means (60, 60", 62, 64), which are capable of shifting the passage of the main distributor from its nominal distribution position to its temporary distribution position, relative to the occurrence of an event representative of the folding of the pantograph, the event representative of the folding of the pantograph being in particular the moment when the contact strip is set to atmospheric pressure, or even in particular the moment when the pantograph reaches its low position.

9. The device according to claims 7 and 8, wherein the first time shift means are common with the second time shift means, knowing that preferably the common time shift means comprise:
- a reserve chamber (60),
- a reserve line (62) connected to the supply means and supplying this reserve chamber, this reserve line having a section restriction (64),
- as well as a control means capable of positioning the main distributor in its temporary position when the pressure in the reserve chamber is lower than a first setpoint value, this control means being further capable of positioning the main distributor in its nominal position when the pressure in the reserve chamber is greater than a second setpoint value.

10. The device according to the preceding claim, wherein the control means comprise a main control line (54") connecting the reserve chamber to the control inlet of the main distributor, knowing that preferably the control means further comprise an intermediate distributor (52), the main control line extending from an outlet of this intermediate distributor, this intermediate distributor comprising an intermediate control line (56) extending from the reserve chamber (60).

11. A pantograph (210) comprising a frame (212), a bow (214) intended to be placed against a catenary (209), a hinged arm (216) connecting the bow to the frame, deployment means (218) of the hinged arm communicated with supply means (206), belonging to a rail vehicle (200) equipped with this pantograph, these supply means being capable of supplying a compressed fluid, in particular compressed air, this pantograph further comprising additionally a quick descent device according to any one of the preceding claims.

12. A method for implementing a pantograph according to the preceding claim, comprising a step of providing a pantograph according to the preceding claim and in which method, the temporary locking means are placed in an active configuration called active blocking configuration, so as to deploy the hinged arm and to bring each contact strip into contact with the catenary, then these temporary blocking means are passed into their inactive configuration called inactive supply configuration, after the occurrence of an event representative of the deployment of the pantograph, the event representative of the deployment of the pantograph being in particular the moment when the supply means start supplying fluid, or even in particular the moment when the pantograph leaves its low position,
knowing that preferably the temporary blocking means are again placed in their active configuration, after the occurrence of an event representative of the folding of the pantograph, the event representative of the folding of the pantograph being in particular the moment when the contact strip is set to atmospheric pressure, or even in particular the moment when the pantograph reaches its low position.

13. A method for improving a pantograph comprising a frame (212), a bow (214) intended to be placed against a catenary (209), a hinged arm (216) connecting the bow to the frame, means (218) for deploying the hinged arm communicated with supply means (206), belonging to a rail vehicle (200) equipped with this pantograph, these supply means being capable of supplying a compressed fluid, in particular compressed air,
a method in which a quick descent device is installed according to one of claims 1 to 10 and, in particular in which the existing pantograph is equipped with a quick descent device, in the used state, in which case this existing device is replaced by the device according to one of claims 1 to 10.

14. A rail vehicle (200) including a roof (204), as well as a pantograph (210) according to claim 11, the frame (212) of the pantograph being fastened on the roof of said rail vehicle.
